Europäisches Patentamt

European Patent Office

Office européen des brevets

(11) Publication number: **0 187 733**
**B1**

## EUROPEAN PATENT SPECIFICATION

(45) Date of publication of patent specification: **17.05.89**

(51) Int. Cl.⁴: **A 01 B 59/043**

(21) Application number: **86830005.4**

(22) Date of filing: **08.01.86**

(54) **Auto hitch quick-release hook end for a three-point lift linkage, featuring a dual safety lock system to protect against accidental unhitching.**

(30) Priority: **11.01.85 IT 4000485**

(43) Date of publication of application:
**16.07.86 Bulletin 86/29**

(45) Publication of the grant of the patent:
**17.05.89 Bulletin 89/20**

(84) Designated Contracting States:
**AT DE FR GB**

(56) References cited:
**CH-A- 452 967**
**DE-A-3 021 343**
**FR-A-1 443 201**
**FR-A-1 516 156**
**US-A-2 979 137**
**US-A-4 019 753**

(73) Proprietor: **Cornia, Omero**
**Via Bordighera 29**
**I-41100 Modena (IT)**

(72) Inventor: **Cornia, Omero**
**Via Bordighera 29**
**I-41100 Modena (IT)**

(74) Representative: **Lanzoni, Luciano**
**c/o BUGNION S.p.A. Viale Trento Trieste, 25**
**I-41100 Modena (IT)**

Courier Press, Leamington Spa, England.

## Description

The invention relates to an automatic quick-release type hook-end for a three-point linkage, featuring a dual safety lock protecting against accidental unhitching.

The use of three-point lift linkages is widespread. Such linkages provide the means by which to hitch implements, farm implements for example, to a tractor, and incorporate three links, hence the term "3-point linkage", each of which may have a hook end offering a ball seat designed to accept the link ball with which each shaft of a hitched implement is provided. Hook ends generally incorporate a safety system which guards against accidental unhitching, and consists in most cases of a catch which projects over the ball seat and is displaced by the link ball when the ball engages the seat; with the link ball seated in the hook end, the safety catch is urged over the ball by a spring such that it remains locked in the seat. In order to unhitch the implement from the tractor, each hook end will normally be provided with a latch that rotates the catch away from and out of the ball seat, thereby permitting detachment of the link ball.

With such an arrangement, as long as the latch is not shifted by the operator, the link ball remains locked fast in the seat by the safety catch, and the implement remains hitched to the three-point linkage.

It can happen on occasions that the implement, hence the link ball, will be subjected to forces acting in a direction such as to produce unwarranted rotation of the safety catch, thereby unseating the link ball and detaching the implement from the tractor, even if only in part. It has been sought to overcome such a drawback by embodiment of the safety catch in special shapes such as will prevent accidental rotation; this type of remedy has its limitations, however, inasmuch as the catch must necessarily remain of shape such as to permit insertion and detachment of the link ball, as and when necessary.

FR—A—1516156, DE—A—3021343 and IT 175735 (Utility Model) disclose hook end of the type above mentioned.

It is an object of the invention disclosed herein to overcome the drawback of accidental unhitching, by providing a hook end wherein unwarranted rotation of the safety catch locking the implement in place is altogether impeded, but wherein the facilities are retained of an automatic type of hitch (auto hitch) and of quick release of the implement, both of which controlled from the driver seat of the tractor, say, by way of latch rods that rotate the safety catches, as in hook ends of the relative conventional type. It is a further object of the invention to provide a hook end featuring simple, compact construction and ease-of-assembly, and affording operation of the utmost dependability.

The objects stated above, and other objects besides, are realized with a hook end as disclosed herein and as claimed hereinafter, which in the same way of IT 175735 and DE—A—3021343, is of the type comprising: a hook, provided with a seat adapted to accommodate a link ball of the hitched implement, and exhibiting a substantially vertical appendage located at a front end of the hook, opposite to that from which the link ball of the implement is hitched; a hollow-bodied safety catch that fits over the appendage and hinges thereupon by way of a pin, and is rotatable about the fixed axis of such a pin between a locking position, in which the catch projects over a part of the seat of the hook and retains the link ball therein, and a release position, in which the catch no longer projects over the part of the seat of the hook; first tension means designed to urge the safety catch continually into the locking position; and a latch associated with the safety catch in such a way as to bring about its rotation from the locking position into the release position; and is characterized in that the hook end comprises a ratchet-type mechanism incorporating a ratchet component, located internally of the hollow-bodied safety catch, obliged to rotate as one therewith and slidable in relation thereto, and a pawl component, also located internally of the safety catch and hinged thereupon about an axis embodied integral with the safety catch and disposed parallel to the axis about which the catch itself is rotated, and in that such a ratchet mechanism is able to assume a first unhitched position, in which the ratchet component protrudes rearwardly beyond the end of the safety catch that projects over the seat of the hook, the pawl component being urged into contact with the ratchet component which remains free to rotate, a second locking position, in which the ratchet component no longer protrudes from the safety catch, and a third release position in which the pawl component is totally separated from the ratchet component.

The hook end disclosed is characterized further in that it comprises second tension means designed to exert a continuous pressure on the ratchet component such that it protrudes beyond the safety catch in said first position, third tension means designed to urge the pawl component into contact with the ratchet component in said first position, and means of release connected to said latch that operate against the bias of the third tension means and are designed to separate the pawl component from the ratchet component in said third position; and in that the vertical appendage exhibits a projection at its front end, the shape and position of which are such that a part of the pawl component may locate thereunder in order to impede any upward movement of the pawl component as a whole and thereby lock the safety catch, when the ratchet mechanism assumes the second position.

A preferred embodiment of the hook end disclosed herein will now be described with reference to the accompanying drawings, in which:

Fig. 1 is an illustration of the hook end showing the catch in cutaway, with the ratchet-type mechanism in its first position;

Fig. 2 is an illustration of the hook end showing the catch in cutaway with the ratchet-type mechanism in its second position;

Fig. 3 is an illustration of the hook end showing the catch in cutaway, with the ratchet-type mechanism, certain parts of which are omitted better to reveal others, in its third position;

Figs. 4 & 5 are perspectives of two possible embodiments of the ratchet component of the mechanism, with certain parts omitted better to reveal others;

Fig. 6 is a perspective of the pawl component of the ratchet-type mechanism;

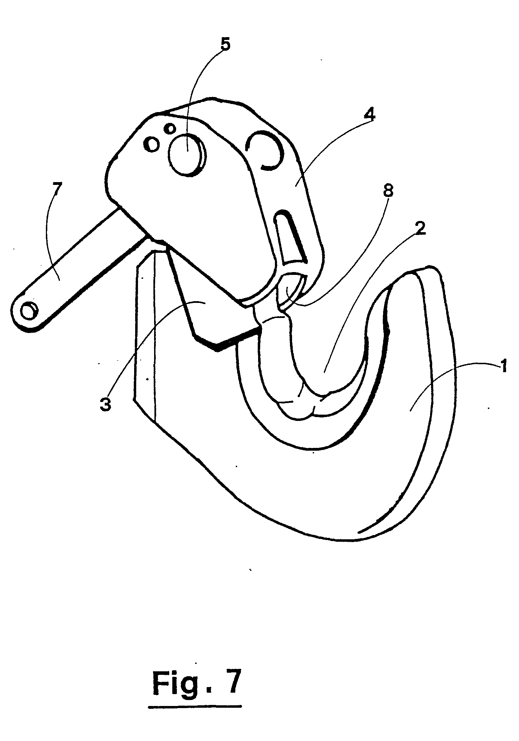

Fig. 7 is a perspective of the entire hook end.

The following description of the hook end illustrated in the drawings assumes fitment to either of the two lower links of a three point linkage; it is in fact these links (the lift links) which are most subject to accidental unhitching.

The hook end 1 incorporates a seat 2, generally with a ball shaped surface, which is designed to accommodate a relative link ball (illustrated in broken line) with which the hitched implement is provided, and incorporates a substantially vertical appendage 3 which is located at the side of the hook opposite to that from which the link ball of the implement is hitched and unhitched.

4 denotes a safety catch which is embodied hollow and fits over the appendage 3, hinging therewith by way of a pin 5 and thus rotatable about the axis of this pin, which is fixed. In rotating about the pin 5, the catch 4 moves from a locking position, into which it is urged continually by first tension means consisting of a coil spring 6 and in which it projects over the seat 2 in such a way as to retain the link ball therein, to a release position, gained by clockwise rotation of the catch itself, in which it no longer projects over the seat and therefore offers no obstruction to passage of the link ball.

In the limit position whereby the catch locks a link ball safely in place, a stop 10 is brought into contact with the rear of the appendage 3, urged thereagainst by the coil spring 6, as aforesaid. As one having skill in the art will readily appreciate from the drawings, such a limit position can equally well be produced by extending the upper outer surface of the catch to the point where it makes direct contact with the rear of the appendage 3.

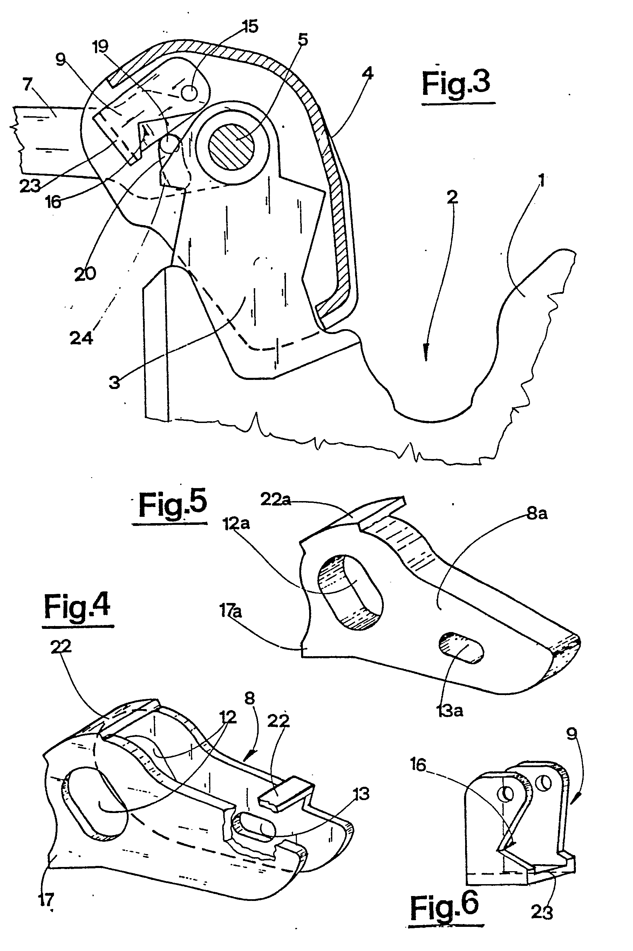

Rotation of the safety catch both in the case of a conventional hook end, and, in the manner described hereinafter, of a hook end according to the invention, is produced by operation of a latch 7, the usual method being that whereby a rod inserted in a pin-eye incorporated into the latch 7 is worked manually by the operator of the tractor, from the driver seat. The hook end according to the invention comprises a ratchet-type mechanism; in a first embodiment of the mechanism illustrated in Fig. 4, the ratchet component consists of a first contoured yoke 8, and the pawl consists of a second contoured yoke 9. The first such yoke 8 comprises two members that exhibit dissimilar contours (see Fig. 4) and are interconnected by metal bridging pieces 22, and embodied thus, can be slipped over the appendage 3 of the hook. The two members are provided with respective slots 12 which freely accommodate the fixed pin 5, in such a way that the yoke 8 can be hinged thereto.

13 denotes a slot cut into one of the members of the first yoke 8, which extends substantially in a radial direction in relation to the pin 5, and freely accommodates a first contact pin 14 integral with the inside face of the hollow safety catch 4. The remaining member of the yoke 8 exhibits a spur 17 at rear, the purpose of which will become clear in due course. The second yoke 9, which constitutes the pawl of the ratchet-type mechanism, likewise comprises two dissimilarly contoured members (Fig. 6) interconnected by a metal bridging piece 23. The yoke 9 is located internally of the hollow-bodied safety catch 4 and to the rear of the yoke 8 that constitutes the ratchet component of the mechanism, rotatable about a hinge pin 15 which is made fast to the catch 4 at a given point above the pin 5 having the fixed axis.

16 denotes a recess created in one of the members of the second yoke 9, in which the spur 17 at the rear of the first yoke 8 locates whenever the mechanism assumes a second position. The frontal surface 18 of the bridging piece 23 provides a check against which the spur 17 locates when the mechanism is made to assume a first position.

11 denotes a leaf spring located within the hollow-bodied safety catch 4, one end of which is seated on the top bridging piece 22 of the first yoke 8, the remaining end urging against the rear of the bridging piece 23 of the second yoke 9, or pawl; the central section of the spring is located underneath the pawl hinge pin 15. The leaf spring 11 thus provides second tension means which exert a continual pressure on the first yoke 8 or ratchet component, causing it to protrude forward beyond the catch as a result of downward movement occasioned by such pressure. The same spring 11 also constitutes third tension means which urge the pawl against the ratchet, since the pressure exerted by the spring on the second yoke 9 is such as to bias it continuously toward the first yoke 8.

The hook end according to the invention further comprises means of release that work against the action of the third tension means, i.e. the leaf spring 11, and are designed to separate the pawl component from the ratchet component by disengaging the spur 17 from the recess 16. Such means consist of a second contact pin 19 which is integral with the latch 7 and engages in a arched slot 20 set in the side of the safety catch 4. The contact pin 19 is of length such as to penetrate into the hollow of the catch, and rotation of the latch 7, which is hinged to the fixed pin 5, will bring it up against one of the two members of the second yoke 9; the second yoke is thus caused to turn on its hinge pin 15 and separate from the first yoke 8.

The hook appendage 3 is provided at rear with a projection 24 beneath which the bridging piece 23 of the pawl locates whenever the ratchet mechanism assumes the second position, in such a way as to inhibit upward movement of the pawl.

The shape of the ratchet component might well be different to that illustrated in Fig. 4 and described in the foregoing text, for instance; a single plate 8a of thickness approximately equal to the sum of the thicknesses of the two members of the yoke 8, accommodated similarly inside the hollow catch 4. Such a plate would be provided with a single slot 12a, corresponding to the pair of slots 12 aforedescribed and performing the same function, which accommodates the fixed pin 5, also, with a spur 17a corresponding to the spur 17 aforedescribed and performing the same function, and with a slot 13a, corresponding to the slot 13 aforedescribed and performing the same function, in which the first contact pin 14 may engage. The plate 8a thus embodied would be provided with a bridging piece 22a, the position of which corresponds exactly to the position of the bridging piece 22 of the yoke 8; one end of the leaf spring 11 would thus be seated on this bridging piece 22a in exactly the same fashion as for the yoke type ratchet component described above.

Operation of the hook end is as follows.

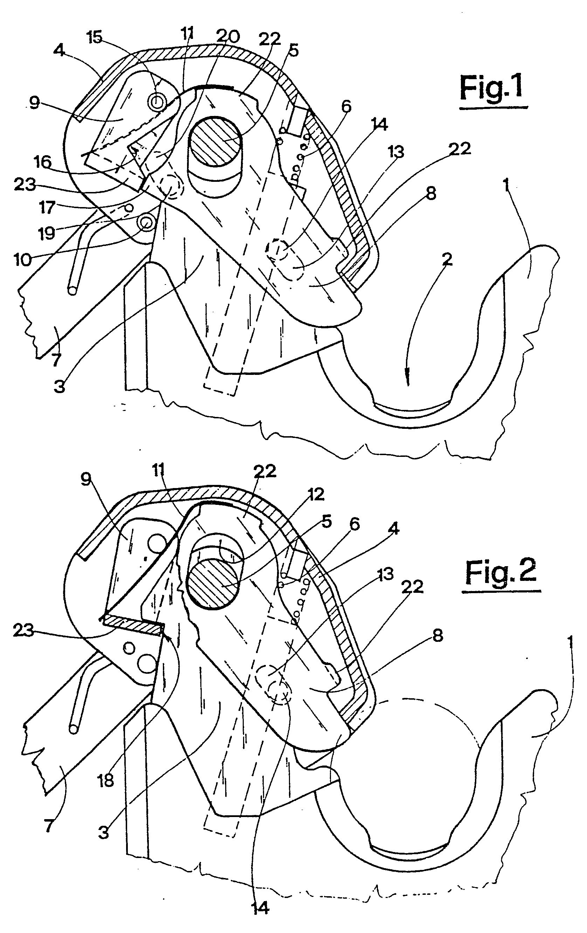

With the hook end disposed so as to receive the link ball of the implement (Fig. 1) the catch 4 is urged into the locking position by the coil spring 6, free thus to rotate clockwise by reason of the mechanism's being in the first position, with the ratchet component projecting over the seat 2 of the hook, the spur 17/17a separated from the recess 16, and the bridging piece 23 distanced from the projection 24.

When the link ball is offered to the hook end, it is the ball itself which shifts the safety catch 4 and causes its rotation in a clockwise direction, drawing with it the ratchet component, by way of the contact pin 14, and the pawl component, by way of the hinge pin 15. The link ball comes up ultimately against the protruding end of the ratchet component and causes it to slide upwards such that the spur 17/17a may engage in the recess 16 offered by the pawl 9 which, under pressure from the leaf spring 11, is urged down onto the ratchet. The degree of play provided between the slots 12 or slot 12a and the fixed pin 5, and between the slot 13/13a and the contact pin 14, avoids the ratchet component sticking fast on its upward travel. With the link ball seated in the hook end, the safety catch rotates back through the anticlockwise direction, returning once again to the locking position in which the link ball is held fast in the seat; it will be observed that the ratchet mechanism places no obstacle in the way of this return rotation.

At this point, with the mechanism assuming the second position (Fig. 2), the spur 17/17a is engaged in the recess 16, and the pawl bridging piece 23 is located beneath the projection 24; in this position the pawl completely inhibits rotation of the ratchet component and of the safety catch, and no matter what force may be exerted by the link ball on the catch, there is no possibility of the catch's rotating clockwise in such a way that the link ball becomes unseated from the hook end.

To detach the implement, the latch 7 is rotated by the operator in a clockwise direction. In the first, unimpeded stage of such rotation, the second contact pin 19 urges against one of the members of the pawl 9 in such a way as to turn it clockwise, thereby lifting the pawl itself and separating it both from the ratchet and from the projection 24 of the appendage. The ratchet mechanism is thus brought into the third position illustrated in Fig. 3, and rotating the latch further, the pin 19, which by now has separated the pawl from the ratchet, reaches the end of the slot 20 and engages the safety catch 4, causing it to rotate into the release position that allows the link ball to exit from the seat.

With the link ball freed from the seat, the ratchet component is urged downward by the leaf spring 11 in such a way as to project over the seat; such pressure also produces downward shift of the spur 17/17a. Letting go of the latch 7, the pawl will no longer be subject to the action of the second contact pin 19, and is urged downward by the spring 11; the frontal surface 18 of the bridging piece 23 strikes against the spur 17/17a, this having descended in the meantime as aforementioned, and the hook end reassumes the position as shown in Fig. 1, ready to receive a link ball once again.

The hook end disclosed herein thus offers a twofold safety system guarding against accidental unhitching of the implement from the linkage -viz, in addition to the standard safety catch which projects over the seat of the hook, one has the supplementary safety feature of a ratchet-type mechanism which, with the link ball fast in the seat, impedes rotation of the catch, thereby preventing possible separation of the link ball from the seat of the hook end. It will be observed that this safety feature is obtained without in any way abandoning the auto hitch facility offered by such a hook end; releasing the link ball, the hook is automatically reset to enable repeat of the hitching operation in similar fashion.

## Claims

1. Auto hitch quick-release hook end for a three-point lift linkage, featuring a dual safety lock system to protect against accidental unhitching, of the type comprising: a hook (1), provided with a seat (2) adapted to accommodate a link ball of the hitched implement and exhibiting a substantially vertical appendage (3) located at a front end of the hook, opposite to that from which the link ball of the implement is hitched; a hollow-bodied safety catch (4) that fits over the appendage and hinges thereupon by way of a pin (5), and is rotatable about the fixed axis of such a pin (5) between a locking position, in which the catch (4) projects over a part of the seat of the hook (1) and retains the link ball therein, and a release position, in which the catch (4) no longer projects over the part of the seat of the hook; first tension means (6) designed to urge the safety catch (4) continually into the locking position; and a latch (7) associated with the safety catch (4) in such a way as to bring about its rotation from the locking position into the release position; characterized

in that the hook end comprises a ratchet-type mechanism incorporating a ratchet component (8 or 8a), located internally of the hollow-bodied safety catch (4), obliged to rotate as one therewith and slidable in relation thereto, and a pawl component (9), also located internally of the safety catch (4) and hinged thereupon about an axis embodied integrally with the safety catch and disposed parallel to the axis (5) about which the catch (4) itself is rotated;

in that such a ratchet mechanism (8, 8a) is able to assume a first unhitched position, in which the ratchet component (8, 8a) protrudes rearwardly beyond the end of the safety catch (4) that projects over the seat (2) of the hook (1), the pawl component (9) being urged into contact with the ratchet component (9) which remains free to rotate, a second locking position, in which the ratchet component (8, 8a) no longer protrudes from the safety catch (4), and a third, release position in which the pawl component (8, 8a) is totally separated from the ratchet component (9);

in that it comprises second tension means (11) designed to exert a continuous pressure on the ratchet components (8, 8a) such that it protrudes beyond the safety catch in said first position, third tension means (11) designed to urge the pawl component (9) into contact with the ratchet component in said first position, and means of release (9) connected to said latch (7) that operate against the bias of the third tension means (1) and are designed to separate the pawl component from the ratchet component (8, 8a) in said third position; and

in that the vertical appendage (3) exhibits a projection at its front end, the shape and position of which are such that a part of the pawl component (9) may locate thereunder in order to impede any upward movement of the pawl component as a whole and thereby lock the safety catch (4), when the ratchet mechanism assumes the second position.

2. Hook end as in claim 1, wherein the ratchet component consists of a first contoured yoke (8) that fits over the appendage of the hook and is provided with a pair of substantially vertical slots (12) freely accommodating the axially fixed pin (5), one of the two members of the first contoured yoke(s) is provided with a slot (13) extending substantially in a radial direction in relation to the axially fixed pin (5) and freely accommodating a first contact pin (14) integral with the inside face of the hollow-bodied safety catch (4); wherein the pawl component (9) consists of a second contoured yoke (9), located to the rear of the first yoke in relation to the seat of the hook end, rotatable about a hinge pin (15) positioned at a given point above the pin having the fixed axis, one of the members of the second contoured yoke (9) affording a recess (16) in which a spur (17) integral with the rear of the first yoke locates whenever the mechanism assumes the second position, and provided with a surface (18), outside the bounds of the recess, against which the spur (17) locates whenever the mechanism assumes the first position; and wherein the second and third tension means consist of a leaf spring (11) located inside a hollow-bodied safety catch (4), having one end seated against the rear part of the pawl component (9), the remaining end seated against the rear part of the ratchet component, and an intermediate section lodged beneath the hinge pin (5).

3. Hook end as in claim 1, wherein the ratchet component consists of a plate (8a), provided with a substantially vertical slot (12a) freely accommodating the axially fixed pin, and with a slot (13a) extending substantially in a radial direction, in relation to the axially fixed pin, which freely accommodates a first contact pin (14) integral with the inside face of the hollow-bodied safety catch; wherein the pawl component consists of a second contoured yoke (9), located to the rear of the plate in relation to the seat of the hook end, rotatable about a hinge pin (15) positioned at a given point above the pin having the fixed axis, one of the members of the second contoured yoke (9) affording a recess (16) in which a spur (17a) integral with the rear of the plate (8a) locates whenever the mechanism assumes the second position, and provided with a surface (18), outside the bounds of the recess, against which the spur (17a) locates whenever the mechanism assumes the first position; and wherein the second and third tension means consist of a leaf spring (11) located inside of the hollow-bodied safety catch, having one end seated against the rear part of the pawl component, the remaining end seated against the rear part of the ratchet component, and an intermediate section lodged beneath the hinge pin.

4. Hook end as in claim 1, wherein the latch is hinged to the pin (5) having the fixed axis, positioned to one side of the safety catch (4), and provided with a second contact pin (19) that engages in an arched slot (20) set in the side of the safety catch in such a way as to allow the latch an initial arc of unimpeded rotation relative to the catch, the extent of which being governed by the slot, following which the catch is taken up by the latch and turned together therewith; and wherein the contact pin, the length of which is such that it may engage the pawl component during such unimpeded rotation and bring the ratchet mechanism into the third position, thus constitutes means of release.

**Patentansprüche**

1. Automatischer, schnell loesender Kupplungshaken fuer ein Dreipunktgestaenge mit einem doppelten Blockiersystem gegen unerwuenschtes Entkuppeln von der Art enthaltend: einen Haken (1), versehen mit einem Sitz (2), der fuer eine sich an dem anzuhaengenden Geraet befindliche Kupplungskugel geeignet ist und einen im wesentlichen vertikalen Ansatz (3) aufweist, der an einer Stirnseite des Hakens und entgegengesetzt zu der Seite angeordnet ist, an der die Kupplungskugel des Geraetes eingehaengt wird; eine innen hohle Sicherheitsklinke (4), die ueber den Ansatz greift und an diesem durch einen Zapfen (5) angelenkt und um eine feste Achse dieses Zapfens (5) drehbar ist, und zwar zwischen einer Schliessposition, in welcher sich die Klinke (4) ueber einen Teil des Sitzes des Hakens (1) erstreckt und die Kupplungskugel darin festhaelt, und einer geloesten Position, in welcher die Klinke (4) sich nicht laenger ueber einen Teil des Sitzes des Hakens erstreckt; erste Spannmittel (6), die dazu dienen, die Sicherheitsklinke (4) staendig in die Schliessposition zu druecken; sowie einen Hebel (7), der auf solche Weise mit der Sicherheitsklinke (4) verbunden ist, dass er deren Umdrehung aus der Schliessposition in die geloeste Position bewirkt, dadurch gekennzeichnet, dass das Hakenende einen Sperrmechanismus enthaelt, der mit einem im Inneren der hohlen Sicherheitsklinke (4) angeordneten Sperrzahn (8 oder 8a) versehen ist, welcher gezwungen ist, sich mit letzterer zu drehen und im Verhaeltnis zu dieser verschiebbar ist, sowie einen Sperrhaken (9), ebenfalls in Inneren der Sicherheitsklinke (4) angeordnet und an diese angelenkt um eine Achse, die vollstaendig eins ist mit der Sicherheitsklinke und parallel zu der Achse (5) angeordnet ist, um die sich die Klinke (4) selbst dreht; und dadurch, dass der Sperrmechanismus (8, 8a) eine nicht eingerastete Position einnehmen kann, in welcher der Sperrzahn (8, 8a) rueckwaerts ueber das Ende der Sicherheitsklinke (4) hinausragt, die sich ueber den Sitz (2) des Hakens (1) erstreckt, wobei der Sperrhaken (9) gegen den Sperrzahn gedrueckt bleibt, welcher sich frei drehen kann, sowie eine zweite Schliessposition, in welcher der Sperrzahn (8, 8a) nicht laenger aus der Sicherheitsklinke (4) herausragt, und eine dritte geloeste Position, in der der Sperrhaken (9) vollstaendig von dem Sperrzahn (8, 8a) getrennt ist; und dadurch, dass er zweite Spannmittel (11) enthaelt, die dazu bestimmt sind, einen kontinuierlichen Druck auf den Sperrzahn (8, 8a) zu bewirken, so dass dieser ueber die Sicherheitsklinke in der genannten ersten Position hinausragt, sowie dritte Spannmittel (11), dazu bestimmt, den Sperrhaken (9) gegen den Sperrzahn in der genannten ersten Position zu druecken, und mit dem genannten Hebel (7) verbundene Mittel zum Loesen (9), die der Wirkung der dritten Spannmittel (11) entgegenstehen und dazu bestimmt sind, den Sperrhaken von dem Sperrzahn (8, 8a) in der genannten dritten Position zu trennen; und dadurch, dass der vertikale Ansatz (3) an seinem vorderen Ende einen Vorsprung aufweist, dessen Form und Position solche ist, dass sich ein Teil des Sperrhakens (9) unter diesen schieben kann, um jede Verschiebung des Sperrhakens selbst nach oben vollstaendig zu verhindern und dabei die Sicherheitsklinke (4) zu blockieren, wenn der Sperrmechanismus die zweite Position einnimmt.

2. Kupplungshaken nach Patentanspruch 1, dadurch gekennzeichnet, dass der Sperrzahn aus einer ersten profilierten Gabel (8) besteht, die ueber den Ansatz des Hakens greift und mit einem Paar von im wesentlichen vertikalen Langloechern (12) versehen ist, welche frei den Zapfen (5) mit fester Achse aufnehmen, wobei eines der beiden Elemente der ersten profilierten Gabel (8) mit einem Langloch (13) versehen ist, das sich im Verhaeltnis zu dem Zapfen (5) mit fester Achse in einer im wesentlichen radialen Richtung erstreckt und frei einen ersten Kontaktzapfen (14) aufnimmt, der eins mit der Innenflaeche der hohlen Sicherheitsklinke (4) ist; und dadurch, dass der Sperrhaken (9) aus einer zweiten profilierten Gabel (9) besteht, die im Verhaeltnis zu dem Sitz des Hakens an der Rueckseite der ersten Gabel angeordnet und um einen Gelenkzapfen (15) drehbar ist, letzterer angeordnet oberhalb des Zapfens mit der festen Achse, wobei eines der Elemente der zweiten profilierten Gabel (9) eine Vertiefung aufweist, in welche sich ein fest mit der Rueckseite der ersten Gabel verbundener Dorn (17) einschiebt, wenn immer der Mechanismus die zweite Position einnimmt, sowie eine Flaeche (18) ausserhalb des Randes der Vertiefung, an der sich der Dorn (17) anordnet, wenn immer der Mechanismus die erste Position einnimmt; und dadurch, dass die zweiten und dritten Spannmittel aus einer Blattfeder (11) bestehen, die innerhalb der hohlen Sicherheitsklinke (4) angeordnet ist, und deren eines Ende an der Rueckseite des Sperrhakens (9) anliegt und das verbleibende Ende an der Rueckseite des Sperrzahns, waehrend sich ein Zwischenabschnitt unter dem Gelenkzapfen (15) befindet.

3. Kupplungshaken nach Patentanspruch 1, dadurch gekennzeichnet, dass der Sperrzahn aus einer Platte (8a) besteht, die mit einem im wesentlichen vertikalen Langloch (12a) versehen ist, das frei einen Zapfen mit fester Achse aufnimmt, sowie mit einem Langloch (13a), dass sich im Verhaeltnis zu dem Zapfen mit fester Achse im wesentlichen in radialer Richtung erstreckt und frei einen ersten Kontaktzapfen (14) aufnimmt, der fest mit der Innenflaeche der hohlen Sicherheitsklinke verbunden ist; und dadurch, dass der Sperrhaken aus einer zweiten profilierten Gabel (9) besteht, die im Verhaeltnis zu dem Sitz des Hakens an der Rueckseite der Platte angeordnet und um einen Gelenkzapfen (15) drehbar ist, letzterer angeordnet oberhalb des Zapfens mit der festen Achse, wobei eines der Elemente der zweiten profilierten Gabel (9) eine Vertiefung (16) aufweist, in die sich ein fest mit der Rueckseite der Platte (8a) verbundener Dorn (17a) einschiebt, wenn immer der Mechanismus die zweite Position einnimmt, und wobei es mit einer ausserhalb des Randes der Vertiefung liegenden Flaeche (18) versehen ist, an der sich der Dorn (17a) anordnet, wenn immer der Mechanismus die erste Position einnimmt; und dadurch, dass die zweiten und dritten Spannmittel aus einer Blattfeder (11) bestehen, die im Inneren der hohlen Sicherheitsklinke angeordnet sind, und deren eines Ende an der Rueckseite des Sperrhakens anliegt und das verbleibende Ende an der Rueckseite des Sperrzahns, waehrend sich ein Zwischenabschnitt unter dem Gelenkzapfen befindet.

4. Kupplungshaken nach Patentanspruch 1, dadurch gekennzeichnet, dass der Hebel an den Zapfen (5) mit der festen Achse angelenkt, auf der einen Seite der Sicherheitsklinke (4) angeordnet und mit einem zweiten Kontaktzapfen (19) versehen ist, der in ein gebogenes Langloch (20) greift, das auf solche Weise in die Seite der Sicherheitsklinke eingearbeitet ist, die es dem Hebel erlaubt, einen ersten Bogen unbehinderter Umdrehung im Verhaeltnis zu der Klinke auszufuehren, deren Ausdehnung durch das Langloch bestimmt wird, und infolgedessen die Klinke durch den Hebel hochgehoben und zusammen mit diesem gedreht wird; und dadurch, dass der Kontaktzapfen, dessen Laenge eine solche ist, dass er waehrend der unbehinderten Umdrehung den Sperrhaken greift und den Sperrmechanismus in die dritte Position bringt, die Loesemittel bildet.

## Revendications

1. Crochet automatique à désaccouplement rapide pour attelage trois-points comportant un double système de sécurité empêchant un désaccouplement accidentel, du type comportant: un crochet (1) pourvu d'un logement (2) destiné à recevoir une rotule de l'instrument à atteler et présentant un appendice (3) sensiblement vertical situé sur l'extrémité du crochet à l'opposé de celle où il y a l'embouchure pour (4) la rotule de l'instrument; une prise de sécurité creuse qui s'adapte sur l'appendice et est articulée sur celui-ci au moyen d'un pivot (5) de manière à tourner autour de l'axe fixe dudit pivot (5) entre une position de verrouillage, dans laquelle la prise (4) déborde partiellement au-dessus du logement du corchet (1) et retient la rotule dans ce logement et une position de déverrouillage, dans laquelle la prise (4) ne déborde plus partiellement au-dessus du logement du crochet; de premiers moyens élastiques (6) destinés à pousser constamment la prise de sécurité (4) dans sa position de verrouillage; et un bras de levier (7) associé à la prise de sécurité (4) de manière à causer sa rotation de la position de verrouillage à la position de déverrouillage; caractérisé

— en ce que le crochet comporte un mécanisme d'encliquetage se composant d'une griffe (8 ou 8a), située à l'intérieur de la prise de sécurité creuse (4), destinée à tourner de manière solidaire avec celle-ci et étant coulissante par rapport à celle-ci, et un cliquet (9), également situé à l'intérieur de la prise de sécurité (4) et articulé sur celle-ci de manière qu'il peut pivoter autour d'un axe solidaire de la prise de sécurité et parallèle à l'axe (5) autour duquel la prise elle-même (4) tourne;

— en ce que ce mécanisme d'encliquetage (8, 8a) est à même de prendre une première position de désaccouplement dans laquelle la griffe (8, 8a) fait saillie vers la partie arrière au-delà de l'extrémité de la prise de sécurité (4) qui déborde au-dessus du logement (2) du crochet (1), le cliquet (9) étant poussé en contact avec la griffe (8, 8a) qui reste libre de tourner, une deuxième position de verrouillage, dans laquelle la griffe (8, 8a) ne fait plus saillie de la prise de sécurité (4), et une troisième position de déverrouillage dans laquelle le cliquet (9) est complètement séparé de la griffe (8, 8a);

— en ce qu'il comporte de deuxièmes moyens élastiques (11) destinés à exercer une pression constante sur la griffe (8, 8a) de manière qu'elle fait saillie au-delà de la prise de sécurité dans ladite première position; de troisièmes moyens élastiques (11) destinés à pousser le cliquet (9) en contact avec la griffe dans ladite première position, et des moyens de désaccouplement (9) reliés audit bras de levier (7) qui agissent contre la poussée des troisièmes moyens élastiques (11) et sont destinés à séparer le cliquet de la griffe (8, 8a) dans ladite troisième position;

— et en ce que l'appendice vertical (3) comporte une saillie sur son extrémité avant, dont la forme et la position permettent qu'une partie du cliquet (9) puisse être située au-dessous de celle-ci dans le but d'empêcher tout mouvement vers le haut du cliquet, et par conséquent bloquer la prise de sécurité (4), quand la mécanisme d'encliquetage prend sa deuxième position.

2. Crochet selon la revendication 1, caractérisé en ce que la griffe se compose d'une première fourchette convenablement conformée (8) qui s'adapte sur l'appendice du crochet et est pourvue de deux fentes (12) sensiblement verticales qui recoivent le pivot fixe (5) avec jeu, l'une des deux dents de la première fourchette conformée (6) étant pourvue d'une fente (13) qui s'étend en direction radiale par rapport au pivot fixe (5) et loge avec jeu un premier doigt de contact (14) solidaire de la face intérieure de la prise de sécurité creuse (4) et en se que le cliquet (9) se compose d'une deuxième fourchette convenablement conformée (9), située derrière la première fourchette par rapport au logement du crochet, laquelle est articulée sur un pivot (15) fixé à un endroit déterminé supérieur par rapport au pivot à axe fixe, l'une des dents de la deuxième fourchette conformée (9) présentant une cavité (16) dans laquelle s'engage un ergot (17) solidaire de la partie arrière de la première fourchette chaque fois que le mécanisme d'encliquetage prend sa deuxième position et pourvu d'une surface de butée (18), à l'extérieur des limites de la cavité, contre laquelle l'ergot (17) prend appui chaque fois que le mécanisme prend sa première position; et en ce que les deuxièmes et troisièmes moyens élastiques comportent un ressort à lame (11) situé à l'intérieur de la prise de sécurité creuse (4), dont l'une des extrémités repose contre la partie arrière du cliquet (9), l'autre extrémité prend appui contre la partie arrière de la griffe, et la portion intermédiaire est logée au-dessous du pivot d'articulation (5).

3. Crochet selon la revendication 1, caractérisé en ce que la griffe se compose d'une plaquette (8a) pourvue d'une fente (12a) sensiblement verticale logeant avec jeu le pivot fixe (5) et d'une fente (13a) s'étendant en direction sensiblement radiale par rapport au pivot fixe, dans laquelle peut s'engager avec jeu un premier doigt de contact (14) solidaire de la face intérieure de la prise de sécurité creuse; en ce que le cliquet se compose d'une deuxième fourchette convenablement conformée (9), située derrière la première fourchette par rapport au logement du crochet, laquelle est articulée sur un pivot (15) fixé à un endroit déterminé supérieur par rapport au pivot à axe fixe, l'une des dents de la deuxième fourchette conformée (9) présentant une cavité (16) dans laquelle s'engage un ergot (17a) solidaire de la partie arrière de la plaquette (8a) chaque fois que le mécanisme d'encliquetage prend sa deuxième position et pourvu d'une surface de butée (18), à l'extérieur des limites de la cavité, contre laquelle l'ergot (17a) prend appui chaque fois que le mécanisme prend sa première position; et en ce que les deuxièmes et troisièmes moyens élastiques comportent un ressort à lame (11) situé à l'intérieur de la prise de sécurite creuse, dont l'une des extrémités repose contre la partie arrière du cliquet, l'autre extrémité prend appui contre la partie arrière de la griffe, et la portion intermédiaire est logée au-dessous du pivot d'articulation.

4. Crochet selon la revendication 1, caractérisé en ce que le bras de levier est articulé au pivot (5) à axe fixe, est situé latéralement par rapport à la prise de sécurité (4) et est pourvu d'un deuxième doigt de contact (19) qui s'engage dans une fente cambrée (20) ménagée sur le côté de la prise de sécurité de manière à permettre un premier arc de rotation libre du levier par rapport à la prise, dont l'extension dépend de la longueur de la fente, après ce déplacement la prise étant entraînée en rotation avec le levier; et en ce que le doigt de contact a une longueur suffisante à permettre qu'il engage le cliquet pendant ladite rotation libre de manière à amener le mécanisme d'encliquetage à sa troisième position, et il constitue ainsi lesdits moyens de déverrouillage.

Fig.1

Fig.2

Fig.3

Fig.5

Fig.4

Fig.6

Fig. 7